# EUROPEAN PATENT APPLICATION

(11) **EP 4 509 279 A1**
(43) Date of publication of application: **19.02.2025**
(21) Application number: 23816037.8
(22) Date of filing: 30.05.2023
(51) Int. Cl.: B25J 13/08

(54) **ROBOT SYSTEM, ROBOT, AND METHOD FOR CONTROLLING ROBOT SYSTEM**

(30) Priority: 30.05.2022 JP 2022087471
(71) Applicant: KAWASAKI JUKOGYO KABUSHIKI KAISHA, Kobe-shi, Hyogo 650-8670 (JP)
(72) Inventor: XU, Tianfen, Kobe-shi, Hyogo 650-8670 (JP); OHNO, Seita, Kobe-shi, Hyogo 650-8670 (JP); YOSHIKUWA, Eiji, Kobe-shi, Hyogo 650-8670 (JP)
(74) Representative: Müller-Boré & Partner Patentanwälte PartG mbB
(86) International application number: PCT/JP2023/020012
(87) International publication number: WO 2023/234280

(57) **Abstract**

A robot system (100) includes a robot controller (12) configured or programmed to, while a first imager (31) is imaging a workpiece (W), control a second imager (32) to stand by in a state in which a robot arm (11) is able to grasp the workpiece (W) based on imaging of the workpiece (W) by the second imager (32).

## Description

### Technical Field

The present disclosure relates to a robot system, a robot, and a method for controlling a robot system.

### Background Art

Conventionally, a robot system including a robot arm to which a hand is attached to grasp a workpiece, and two imagers to image the workpiece is known. For example, Japanese Patent Laid-Open No. 6-155349 discloses a robot system including a fixed camera fixed above a workpiece to image the workpiece, a hand camera attached to a robot hand to image the workpiece, and an image processor to recognize the workpiece imaged by the fixed camera and the hand camera. In the robot system disclosed in Japanese Patent Laid-Open No. 6-155349, when the fixed camera erroneously recognizes the workpiece or it is detected that the fixed camera is damaged, the camera that images the workpiece is switched from the fixed camera to the hand camera.

### Prior Art

### Patent Document

Patent Document 1: Japanese Patent Laid-Open No. 6-155349

### Summary of the Invention

Although not clearly described in Japanese Patent Laid-Open No. 6-155349, in a robot system such as that described in Japanese Patent Laid-Open No. 6-155349, after it is determined that a camera that images a workpiece is to be switched from a fixed camera to a hand camera, first, a controller that controls the camera and a robot conceivably performs preliminary processing to grasp the workpiece with a hand of the robot based on imaging of the workpiece by the hand camera. The preliminary processing to grasp the workpiece with the hand of the robot based on imaging of the workpiece by the hand camera is processing by the controller to associate position information of the camera with position information about the hand of the robot, for example. In other words, in the robot system such as that described in Japanese Patent Laid-Open No. 6-155349, immediately after the camera that images the workpiece is switched from the fixed camera to the hand camera, the hand of the robot is conceivably not in a state in which the hand of the robot is able to grasp the workpiece based on imaging of the workpiece by the hand camera. In such a case, a period of time during which the hand of the robot is not able to grasp the workpiece based on imaging of the workpiece by the hand camera occurs. In other words, the efficiency of a workpiece grasping operation by a robot arm is decreased. Therefore, it is desired to reduce or prevent a decrease in the efficiency of the workpiece grasping operation by the robot arm.

The present disclosure is intended to solve the above problem. The present disclosure aims to provide a robot system, a robot, and a method for controlling a robot system each capable of reducing or preventing a decrease in the efficiency of a workpiece grasping operation by a robot arm.

In order to attain the aforementioned object, a robot system according to a first aspect of the present disclosure includes a robot arm to which a hand is attached to grasp a workpiece, two imagers to image the workpiece, and a controller configured or programmed to control the two imagers. The controller is configured or programmed to, while a first one of the two imagers is imaging the workpiece, control a second one of the two imagers to stand by in a state in which the robot arm is able to grasp the workpiece based on imaging of the workpiece by the second one of the two imagers, and to perform a control to switch a state in which the first one of the two imagers is used to image the workpiece to a state in which the second one of the two imagers is used to image the workpiece when a malfunction of the first one of the two imagers is detected while the first one of the two imagers is imaging the workpiece.

In the robot system according to the first aspect of the present disclosure, as described above, the controller is configured or programmed to control the second one of the two imagers to stand by in a state in which the robot arm is able to grasp the workpiece based on imaging of the workpiece by the second one of the two imagers while the first one of the two imagers is imaging the workpiece. Furthermore, the controller is configured or programmed to perform a control to switch a state in which the first one of the two imagers is used to image the workpiece to a state in which the second one of the two imagers is used to image the workpiece when a malfunction of the first one of the two imagers is detected while the first one of the two imagers is imaging the workpiece. Accordingly, while the first one of the two imagers is imaging the workpiece, the second one of the two imagers is kept on standby in a state in which the robot arm is able to grasp the workpiece based on imaging of the workpiece by the second one of the two imagers. Thus, when a malfunction of the first one of the two imagers is detected, the robot arm can immediately grasp the workpiece based on imaging of the workpiece by the second one of the two imagers after a state in which the first one of the two imagers is used to image the workpiece is switched to a state in which the second one of the two imagers is used to image the workpiece. That is, when a state in which the first one of the two imagers is used to image the workpiece is switched to a state in which the second one of the two imagers is used to image the workpiece, it is possible to shorten a period of time during which the robot arm is not able to grasp the workpiece based on imaging of the workpiece by the imager. Consequently, it is possible to reduce or prevent a decrease in the efficiency of the workpiece grasping operation by the robot arm.

In order to attain the aforementioned object, a robot according to a second aspect of the present disclosure includes a robot arm to which a hand is attached to grasp a workpiece, two imagers to image the workpiece, and a controller configured or programmed to control the two imagers. The controller is configured or programmed to, while a first one of the two imagers is imaging the workpiece, control a second one of the two imagers to stand by in a state in which the robot arm is able to grasp the workpiece based on imaging of the workpiece by the second one of the two imagers, and to perform a control to switch a state in which the first one of the two imagers is used to image the workpiece to a state in which the second one of the two imagers is used to image the workpiece when a malfunction of the first one of the two imagers is detected while the first one of the two imagers is imaging the workpiece.

In the robot according to the second aspect of the present disclosure, as described above, the controller is configured or programmed to control the second one of the two imagers to stand by in a state in which the robot arm is able to grasp the workpiece based on imaging of the workpiece by the second one of the two imagers while the first one of the two imagers is imaging the workpiece. Furthermore, the controller is configured or programmed to perform a control to switch a state in which the first one of the two imagers is used to image the workpiece to a state in which the second one of the two imagers is used to image the workpiece when a malfunction of the first one of the two imagers is detected while the first one of the two imagers is imaging the workpiece. Accordingly, similarly to the robot system according to the first aspect, when a malfunction of the first one of the two imagers is detected, the robot arm can immediately grasp the workpiece based on imaging of the workpiece by the second one of the two imagers after a state in which the first one of the two imagers is used to image the workpiece is switched to a state in which the second one of the two imagers is used to image the workpiece. Consequently, it is possible to provide the robot capable of reducing or preventing a decrease in the efficiency of the workpiece grasping operation by the robot arm.

In order to attain the aforementioned object, a method for controlling a robot system according to a third aspect of the present disclosure is a method for controlling a robot system including a robot arm to which a hand is attached to grasp a workpiece, and two imagers to image the workpiece, and includes imaging the workpiece using a first one of the two imagers and causing a second one of the two imagers to stand by in a state in which the robot arm is able to grasp the workpiece based on imaging of the workpiece by the second one of the two imagers while the first one of the two imagers is imaging the workpiece, and switching a state in which the first one of the two imagers is used to image the workpiece to a state in which the second one of the two imagers is used to image the workpiece when a malfunction of the first one of the two imagers is detected while the first one of the two imagers is imaging the workpiece.

In the method for controlling a robot system according to the third aspect of the present disclosure, as described above, the second one of the two imagers is caused to stand by in a state in which the robot arm is able to grasp the workpiece based on imaging of the workpiece by the second one of the two imagers while the first one of the two imagers is imaging the workpiece. Furthermore, a state in which the first one of the two imagers is used to image the workpiece is switched to a state in which the second one of the two imagers is used to image the workpiece when a malfunction of the first one of the two imagers is detected while the first one of the two imagers is imaging the workpiece. Accordingly, similarly to the robot system according to the first aspect, when a malfunction of the first one of the two imagers is detected, the robot arm can immediately grasp the workpiece based on imaging of the workpiece by the second one of the two imagers after a state in which the first one of the two imagers is used to image the workpiece is switched to a state in which the second one of the two imagers is used to image the workpiece. Consequently, it is possible to provide the method for controlling the robot system capable of reducing or preventing a decrease in the efficiency of the workpiece grasping operation by the robot arm.

According to the present disclosure, as described above, it is possible to provide the robot system, the robot, and the method for controlling the robot system each capable of reducing or preventing a decrease in the efficiency of the workpiece grasping operation by the robot arm.

### Brief Description of the Drawings

FIG. 1 is a perspective view showing a robot arm and two imagers of a robot system according to an embodiment of the present disclosure.
FIG. 2 is a block diagram showing the overall configuration of the robot system according to the embodiment of the present disclosure.
FIG. 3 is a diagram showing a control flow by a robot controller of the robot system according to the embodiment of the present disclosure.
FIG. 4 is a block diagram showing the overall configuration of a robot according to a modified example of the embodiment of the present disclosure.

### Modes for Carrying Out the Invention

An embodiment embodying the present disclosure is hereinafter described on the basis of the drawings.

### Configuration of Robot System

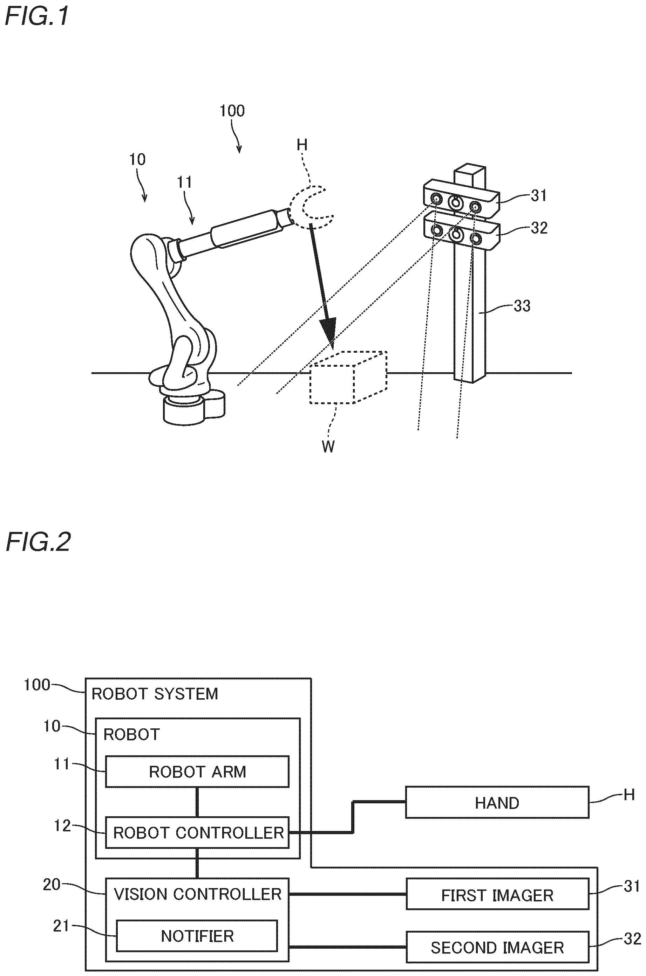

The configuration of a robot system 100 according to an embodiment of the present disclosure is now described with reference to FIGS. 1 and 2.

### Overall Configuration of Robot System

As shown in FIG. 1, the robot system 100 is a system in which a robot arm 11 performs an operation on a workpiece W imaged by an imager. The operation performed by the robot arm 11 is an operation in which the robot arm 11 transfers the workpiece W placed in the vicinity of the robot arm 11 to a predetermined location, for example. FIG. 1 shows an example in which the workpiece W is a cardboard box.

As shown in FIG. 2, the robot system 100 includes a robot 10, a vision controller 20, a first imager 31, and a second imager 32. The first imager 31 and the second imager 32 are examples of a "first one of the two imagers" and a "second one of the two imagers" in the claims, respectively.

The robot 10 includes the robot arm 11 and a robot controller 12. The robot controller 12 is an example of a "controller" in the claims.

As shown in FIG. 1, the robot arm 11 is a vertical articulated robot arm including a plurality of joints. A hand H that grasps the workpiece W is attached to the robot arm 11. The hand H is attached to a distal end of the robot arm 11. The robot arm 11 is controlled by the robot controller 12 to operate the plurality of joints.

As shown in FIG. 2, the robot controller 12 controls the operation of the robot arm 11. The robot controller 12 controls the operation of the hand H attached to the robot arm 11. The robot controller 12 controls the operation of the first imager 31 and the second imager 32 via the vision controller 20. The robot controller 12 includes a processor such as a central processing unit (CPU) and a memory that stores information, for example.

The vision controller 20 is an image processor that processes images captured by the first imager 31 and the second imager 32. The vision controller 20 includes a processor such as a graphics processing unit (GPU) and a memory that stores information, for example.

The first imager 31 and the second imager 32 images the workpiece W (see FIG. 1). The first imager 31 and the second imager 32 are connected in parallel to the vision controller 20. Thus, the robot controller 12 can simultaneously control the first imager 31 and the second imager 32 via the vision controller 20.

The first imager 31 and the second imager 32 include cameras having the same interface to connect each of the first imager 31 and the second imager 32 to the robot controller 12 to communicate information between each of the first imager 31 and the second imager 32 and the robot controller 12, and the same angle of view, which is an imaging range expressed in an angle. Preferably, the first imager 31 and the second imager 32 are completely the same cameras of the same model and made by the same manufacturer.

Each of the first imager 31 and the second imager 32 is a general-purpose camera that does not comply with the environmental resistance standards other than an industrial camera that complies with the environmental resistance standards, for example. Thus, the general-purpose camera is cheaper than the industrial camera, and thus the cost of the robot system 100 can be reduced as compared with a case in which an industrial camera is used for each of the first imager 31 and the second imager 32. Furthermore, it is easier to obtain a general-purpose camera than an industrial camera, and thus the robot system 100 can be operated more easily as compared with a case in which an industrial camera is used for each of the first imager 31 and the second imager 32. Moreover, as described below, in the robot system 100, when a malfunction of the first imager 31 is detected, the robot arm 11 can immediately grasp the workpiece W based on imaging of the workpiece W by the second imager 32 after a state in which the first imagers 31 is used to image the workpiece W is switched to a state in which the second imager 32 is used to image the workpiece **W.** This effect can be obtained even when each of the first imager 31 and the second imager 32 is a general-purpose camera, regardless of the type of camera.

As shown in FIG. 1, the first imager 31 and the second imager 32 are placed at substantially the same position with respect to the robot arm 11 so as to image a common workpiece W. Specifically, the first imager 31 and the second imager 32 are each attached to a predetermined position on a camera attachment member 33 arranged in the vicinity of the workpiece W. The predetermined position is a position at which each of the first imager 31 and the second imager 32 can image the workpiece W.

### Grasping of Workpiece by Robot Arm Based on Image of Workpiece

In the robot system 100, the robot arm 11 grasps the workpiece W based on an image of the workpiece W captured by the first imager 31 or the second imager 32. Specifically, the robot controller 12 (see FIG. 2) controls the first imager 31 or the second imager 32 to image the workpiece W. The vision controller 20 (see FIG. 2) processes the image captured by the first imager 31 or the second imager 32. The robot controller 12 recognizes the position of the workpiece W based on the image processed by the vision controller 20. The robot controller 12 controls the robot arm 11 and the hand H such that the hand H attached to the robot arm 11 grasps the workpiece W based on the recognized position of the workpiece W.

### Switching of Imager That Images Workpiece

In the robot system 100, the first imager 31 images the workpiece W while the second imager 32 is on standby, and when the first imager 31 malfunctions, a state in which the first imager 31 is used to image the workpiece W is switched to a state in which the second imager 32 is used to image the workpiece W. Specifically, the robot controller 12 (see FIG. 2) first controls the second imager 32 to be on standby, and controls the first imager 31 to image the workpiece W. The control to put the second imager 32 on standby is a control to put the second imager 32 on standby such that the robot controller 12 can immediately control the second imager 32 when the robot controller 12 wants to control the second imager 32. The control to put the second imager 32 on standby is a control to keep the second imager 32 powered on and to enable communication between the robot controller 12 and the second imager 32.

Then, the robot controller 12 (see FIG. 2) controls the robot arm 11 and the hand H such that the hand H attached to the robot arm 11 grasps the workpiece W based on the recognized position of the workpiece W while continuing the control to put the second imager 32 on standby. Then, when a malfunction of the first imager 31 is detected during imaging of the workpiece W by the first imager 31, the robot controller 12 performs a control to switch a state in which the first imager 31 is used to image the workpiece W to a state in which the second imager 32 is used to image the workpiece W. The robot controller 12 determines whether or not the first imager 31 has malfunctioned based on the fact that the image captured by the first imager 31 cannot be normally acquired, for example. Then, after imaging of the workpiece W is switched from a state in which the first imager 31 is used to image the workpiece W to a state in which the second imager 32 is used to image the workpiece W, the robot controller 12 controls the robot arm 11 and +the hand H such that the hand H attached to the robot arm 11 grasps the workpiece W based on the position of the workpiece W recognized based on the image of the workpiece W captured by the second imager 32.

The robot controller 12 (see FIG. 2) controls the second imager 32 to stand by in a state in which the robot arm 11 is able to grasp the workpiece W based on imaging of the workpiece W by the second imager 32 while the first imager 31 is imaging the workpiece W. Specifically, the robot controller 12 controls the second imager 32 to stand by in a state in which position information about the second imager 32 and position information about the robot arm 11 are associated with each other such that the robot arm 11 is able to grasp the workpiece W based on imaging of the workpiece W by the second imager 32 while the first imager 31 is imaging the workpiece W.

Specifically, in the robot system 100, when the robot arm 11 grasps the workpiece W based on imaging of the workpiece W by the first imager 31, the robot controller 12 (see FIG. 2) needs to recognize the relative relationship between the coordinate system of the first imager 31 and the coordinate system of the robot arm 11. Similarly, when the robot arm 11 grasps the workpiece W based on imaging of the workpiece W by the second imager 32, the robot controller 12 needs to recognize the relative relationship between the coordinate system of the second imager 32 and the coordinate system of the robot arm 11. Then, as the robot system 100 operates, an error occurs in the relative relationship between the coordinate system of the first imager 31 and the coordinate system of the robot arm 11, and an error occurs in the relative relationship between the coordinate system of the second imager 32 and the coordinate system of the robot arm 11. When the above error becomes large, the robot arm 11 cannot appropriately grasp the workpiece W. Therefore, the robot controller 12 performs a calibration process at the predetermined timing to correct the relative relationship between the coordinate system of the first imager 31 and the coordinate system of the robot arm 11, and the relative relationship between the coordinate system of the second imager 32 and the coordinate system of the robot arm 11. The calibration process is performed as described below, for example. A marker provided on the hand H of the robot arm 11 is imaged a plurality of times while the position of the hand H is changed. Then, based on a plurality of positions of the hand H and a plurality of positions of the marker corresponding to the plurality of positions of the hand H, the relative relationship between the coordinate systems of the imagers and the coordinate system of the robot arm 11 is acquired. The calibration process may be performed constantly, at a predetermined time interval, or only during maintenance of the robot system 100.

When a malfunction of the first imager 31 is detected while the first imager 31 is imaging the workpiece W, the robot controller 12 (see FIG. 2) performs a control to notify a user that the first imager 31 has malfunctioned. Specifically, the vision controller 20 (see FIG. 2) includes a notifier 21 to indicate whether or not the first imager 31 and the second imager 32 are normal. The notifier 21 is a display, a lamp, or a speaker, for example. The robot controller 12 controls the vision controller 20 such that the notifier 21 of the vision controller 20 notifies the user that the first imager 31 has malfunctioned.

The probability that the first imager 31 and the second imager 32 malfunctions substantially simultaneously is extremely lower as compared with the probability that only the first imager 31 malfunctions and the probability that only the second imager 32 malfunctions. Therefore, while the second imager 32 is able to image the workpiece W, the malfunctioning first imager 31 can be repaired or replaced by an operator inspecting the robot system 100. Thus, the robot arm 11 can continue to perform an operation on the workpiece W imaged by the imager.

### Method for Controlling Robot System

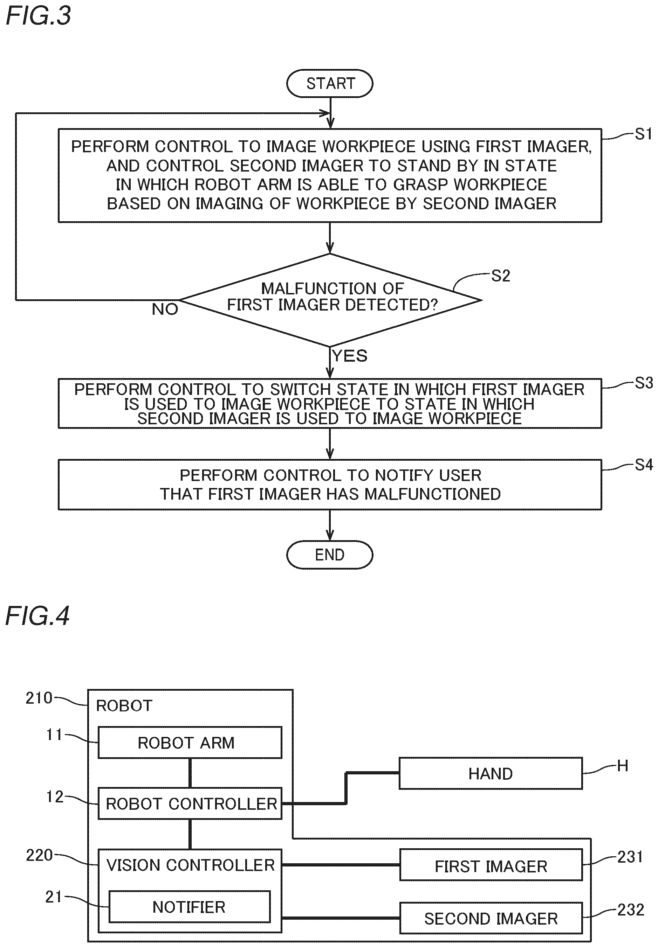

A method for controlling the robot system 100 is now described along a control flow by the robot controller 12 with reference to FIG. 3.

As shown in FIG. 3, in step S1, the robot controller 12 images the workpiece W using the first imager 31, and controls the second imager 32 to stand by in a state in which the robot arm 11 is able to grasp the workpiece W based on imaging of the workpiece W by the second imager 32 while the first imager 31 is imaging the workpiece W.

In step S2, the robot controller 12 determines whether or not a malfunction of the first imager 31 has been detected. When a malfunction of the first imager 31 has been detected in step S2, the process advances to step S3. When a malfunction of the first imager 31 has not been detected in step S2, the process returns to step S1. That is, the process operation in step S2 is repeated until a malfunction of the first imager 31 is detected.

In step S3, the robot controller 12 performs a control to switch a state in which the first imager 31 is used to image the workpiece W to a state in which the second imager 32 is used to image the workpiece W. Then, the process advances to step S4.

In step S4, the robot controller 12 performs a control to notify the user that the first imager 31 has malfunctioned.

In the above control flow, the process operations in step S3 and step S4 may be performed in the reverse order.

### Advantages of Embodiment

According to this embodiment, the following advantages are achieved.

According to this embodiment, the robot controller 12 is configured or programmed to control the second imager 32 to stand by in a state in which the robot arm 11 is able to grasp the workpiece W based on imaging of the workpiece W by the second imager 32 while the first imager 31 is imaging the workpiece W. Furthermore, the robot controller 12 is configured or programmed to perform a control to switch a state in which the first imager 31 is used to image the workpiece W to a state in which the second imager 32 is used to image the workpiece W when a malfunction of the first imager 31 is detected while the first imager 31 is imaging the workpiece W. Accordingly, while the first imager 31 is imaging the workpiece W, the second imager 32 is kept on standby in a state in which the robot arm 11 is able to grasp the workpiece W based on imaging of the workpiece W by the second imager 32. Thus, when a malfunction of the first imager 31 is detected, the robot arm 11 can immediately grasp the workpiece W based on imaging of the workpiece W by the second imager 32 after a state in which the first imagers 31 is used to image the workpiece W is switched to a state in which the second imager 32 is used to image the workpiece W. That is, when a state in which the first imager 31 is used to image the workpiece W is switched to a state in which the second imager 32 is used to image the workpiece W, it is possible to shorten a period of time during which the robot arm 11 is not able to grasp the workpiece W based on imaging of the workpiece W by the imager. Consequently, it is possible to reduce or prevent a decrease in the efficiency of the workpiece W grasping operation by the robot arm 11.

According to this embodiment, the robot controller 12 is configured or programmed to control the second imager 32 to stand by in a state in which the position information about the second imager 32 is associated with the position information about the robot arm 11 such that the robot arm 11 is able to grasp the workpiece W based on imaging of the workpiece W by the second imager 32 while the first imager 31 is imaging the workpiece W. Accordingly, the position information about the second imager 32 is associated with the position information about the robot arm 11 such that the robot arm 11 can be easily brought into a state in which the robot arm 11 is able to grasp the workpiece W based on imaging of the workpiece W by the second imager 32. Consequently, the second imager 32 can be reliably placed on standby in a state in which the robot arm 11 is able to grasp the workpiece W based on imaging of the workpiece W by the second imager 32.

According to this embodiment, the first imager 31 and the second imager 32 include cameras having the same interface to connect each of the first imager 31 and the second imager 32 to the robot controller 12 to communicate information between each of the first imager 31 and the second imager 32 and the robot controller 12, and the same angle of view, which is an imaging range expressed in an angle. Accordingly, the control contents of the imagers by the robot controller 12 to image the workpiece W are the same before and after a state in which the first imager 31 is used to image the workpiece W is switched to a state in which the second imager 32 is used to image the workpiece W, and thus the processing load on the robot controller 12 to control the imagers can be reduced.

According to this embodiment, the first imager 31 and the second imager 32 are placed at substantially the same position with respect to the robot arm 11 so as to image the common workpiece W. Accordingly, as compared with a case in which the first imager 31 and the second imager 32 are placed at positions significantly different from each other with respect to the robot arm 11, the first imager 31 and the second imager 32 can easily image the common workpiece W.

According to this embodiment, the robot controller 12 is configured or programmed to perform a control to notify the user that the first imager 31 has malfunctioned when a malfunction of the first imager 31 is detected while the first imager 31 is imaging the workpiece W. Accordingly, when the first imager 31 has malfunctioned, the user can easily recognize that the first imager 31 has malfunctioned.

### Modified Examples

The embodiment disclosed this time must be considered as illustrative in all points and not restrictive. The scope of the present disclosure is not shown by the above description of the embodiment but by the scope of claims for patent, and all modifications (modified examples) within the meaning and scope equivalent to the scope of claims for patent are further included.

For example, while the example in which the vision controller 20 includes the notifier 21 to indicate whether or not the first imager 31 and the second imager 32 are normal has been shown in the aforementioned embodiment, the present disclosure is not limited to this. In the present disclosure, the notifier may be provided in a portion other than the vision controller to indicate whether or not the two imagers are normal.

While the example in which the robot controller 12 performs a control to notify the user that the first imager 31 has malfunctioned when a malfunction of the first imager 31 is detected the first imager 31 is imaging the workpiece W has been shown in the aforementioned embodiment, the present disclosure is not limited to this. In the present disclosure, the controller may not perform a control to notify the user that a first one of the two imagers has malfunctioned when a malfunction of the first one of the two imagers is detected while the first one of the two imagers is imaging the workpiece. The probability of two imagers malfunctioning at substantially the same time is extremely lower as compared with the probability of one imager malfunctioning, and thus it is not essential for the user to recognize that a first one of the two imagers has malfunctioned immediately after the first one of the two imagers has malfunctioned.

While the example in which the first imager 31 and the second imager 32 are placed at substantially the same position with respect to the robot arm 11 so as to image the common workpiece W has been shown in the aforementioned embodiment, the present disclosure is not limited to this. In the present disclosure, as long as the two imagers can image a common workpiece, a first one and a second one of the two imagers may be placed at significantly different positions with respect to the robot arm.

While the example in which the first imager 31 and the second imager 32 include cameras having the same interface to connect each of the first imager 31 and the second imager 32 to the robot controller 12 to communicate information between each of the first imager 31 and the second imager 32 and the robot controller 12, and the same angle of view, which is an imaging range expressed in an angle, has been shown in the aforementioned embodiment, the present disclosure is not limited to this. In the present disclosure, the two imagers may be cameras having only the same interface or angle of view, or may be cameras having different interfaces and angles of view.

While the example in which the robot controller 12 controls the operation of the first imager 31 and the second imager 32 via the vision controller 20 has been shown in the aforementioned embodiment, the present disclosure is not limited to this. In the present disclosure, the vision controller 20 may directly control the operation of the first imager and the second imager 32.

While the example in which the vision controller 20, the first imager 31, and the second imager 32 are provided separately from the robot 10 has been shown in the aforementioned embodiment, the present disclosure is not limited to this. In the present disclosure, as in a modified example shown in FIG. 4, a robot 210 may include a vision controller 220, a first imager 231, and a second imager 232 in addition to the robot arm 11 and the robot controller 12. The first imager 231 and the second imager 232 are examples of a "first one of the two imagers" and a "second one of the two imagers" in the claims, respectively.

The functionality of the elements disclosed herein may be implemented using circuitry or processing circuitry that includes general purpose processors, special purpose processors, integrated circuits, application specific integrated circuits (ASICs), conventional circuitry and/or combinations thereof that are configured or programmed to perform the disclosed functionality. Processors are considered processing circuitry or circuitry as they include transistors and other circuitry therein. In the present disclosure, the circuitry, units, or means are hardware that carries out the recited functionality or hardware that is programmed to perform the recited functionality. The hardware may be hardware disclosed herein or other known hardware that is programmed or configured to carry out the recited functionality. When the hardware is a processor that may be considered a type of circuitry, the circuitry, means, or units are a combination of hardware and software, and the software is used to configure the hardware and/or processor. Description of Reference Numerals

### Aspects

It will be appreciated by those skilled in the art that the exemplary embodiments described above are specific examples of the following aspects.

### (Item 1)

A robot system comprising:
a robot arm to which a hand is attached to grasp a workpiece;
two imagers to image the workpiece; and
a controller configured or programmed to control the two imagers; wherein
the controller is configured or programmed to, while a first one of the two imagers is imaging the workpiece, control a second one of the two imagers to stand by in a state in which the robot arm is able to grasp the workpiece based on imaging of the workpiece by the second one of the two imagers, and to perform a control to switch a state in which the first one of the two imagers is used to image the workpiece to a state in which the second one of the two imagers is used to image the workpiece when a malfunction of the first one of the two imagers is detected while the first one of the two imagers is imaging the workpiece.

### (Item 2)

The robot system according to item 1, wherein the controller is configured or programmed to control the second one of the two imagers to stand by in a state in which position information about the second one of the two imagers is associated with position information about the robot arm such that the robot arm is able to grasp the workpiece based on the imaging of the workpiece by the second one of the two imagers while the first one of the two imagers is imaging the workpiece.

### (Item 3)

The robot system according to item 1 or 2, wherein the two imagers include cameras having a same interface to connect each of the two imagers to the controller to communicate information between each of the two imagers and the controller, and a same angle of view, which is an imaging range expressed in an angle.

### (Item 4)

The robot system according to any one of items 1 to 3, wherein the two imagers are placed at substantially a same position with respect to the robot arm so as to image a common workpiece.

### (Item 5)

The robot system according to any one of items 1 to **4,** wherein the controller is configured or programmed to perform a control to notify a user that the first one of the two imagers has malfunctioned when a malfunction of the first one of the two imagers is detected while the first one of the two imagers is imaging the workpiece.

### (Item 6)

A robot comprising:
a robot arm to which a hand is attached to grasp a workpiece;
two imagers to image the workpiece; and
a controller configured or programmed to control the two imagers; wherein
the controller is configured or programmed to, while a first one of the two imagers is imaging the workpiece, control a second one of the two imagers to stand by in a state in which the robot arm is able to grasp the workpiece based on imaging of the workpiece by the second one of the two imagers, and to perform a control to switch a state in which the first one of the two imagers is used to image the workpiece to a state in which the second one of the two imagers is used to image the workpiece when a malfunction of the first one of the two imagers is detected while the first one of the two imagers is imaging the workpiece.

### (Item 7)

A method for controlling a robot system, the robot system comprising a robot arm to which a hand is attached to grasp a workpiece, and two imagers to image the workpiece, the method comprising:
imaging the workpiece using a first one of the two imagers, and causing a second one of the two imagers to stand by in a state in which the robot arm is able to grasp the workpiece based on imaging of the workpiece by the second one of the two imagers while the first one of the two imagers is imaging the workpiece; and
switching a state in which the first one of the two imagers is used to image the workpiece to a state in which the second one of the two imagers is used to image the workpiece when a malfunction of the first one of the two imagers is detected while the first one of the two imagers is imaging the workpiece.

10, 210: robot
11: robot arm
12: robot controller (controller)
31, 231: first imager (first one of the two imagers)
32, 232: second imager (second one of the two imagers)
100: robot system
H: hand
W: workpiece

## Claims

1. A robot system comprising:
a robot arm to which a hand is attached to grasp a workpiece;
two imagers to image the workpiece; and
a controller configured or programmed to control the two imagers; wherein
the controller is configured or programmed to, while a first one of the two imagers is imaging the workpiece, control a second one of the two imagers to stand by in a state in which the robot arm is able to grasp the workpiece based on imaging of the workpiece by the second one of the two imagers, and to perform a control to switch a state in which the first one of the two imagers is used to image the workpiece to a state in which the second one of the two imagers is used to image the workpiece when a malfunction of the first one of the two imagers is detected while the first one of the two imagers is imaging the workpiece.

2. The robot system according to claim **1,**
wherein the controller is configured or programmed to control the second one of the two imagers to stand by in a state in which position information about the second one of the two imagers is associated with position information about the robot arm such that the robot arm is able to grasp the workpiece based on the imaging of the workpiece by the second one of the two imagers while the first one of the two imagers is imaging the workpiece.

3. The robot system according to claim 1,
wherein the two imagers include cameras having a same interface to connect each of the two imagers to the controller to communicate information between each of the two imagers and the controller, and a same angle of view, which is an imaging range expressed in an angle.

4. The robot system according to claim 1,
wherein the two imagers are placed at substantially a same position with respect to the robot arm so as to image a common workpiece.

5. The robot system according to claim 1,
wherein the controller is configured or programmed to perform a control to notify a user that the first one of the two imagers has malfunctioned when a malfunction of the first one of the two imagers is detected while the first one of the two imagers is imaging the workpiece.

6. A robot comprising:
a robot arm to which a hand is attached to grasp a workpiece;
two imagers to image the workpiece; and
a controller configured or programmed to control the two imagers; wherein
the controller is configured or programmed to, while a first one of the two imagers is imaging the workpiece, control a second one of the two imagers to stand by in a state in which the robot arm is able to grasp the workpiece based on imaging of the workpiece by the second one of the two imagers, and to perform a control to switch a state in which the first one of the two imagers is used to image the workpiece to a state in which the second one of the two imagers is used to image the workpiece when a malfunction of the first one of the two imagers is detected while the first one of the two imagers is imaging the workpiece.

7. A method for controlling a robot system, the robot system comprising a robot arm to which a hand is attached to grasp a workpiece, and two imagers to image the workpiece, the method comprising:
imaging the workpiece using a first one of the two imagers, and causing a second one of the two imagers to stand by in a state in which the robot arm is able to grasp the workpiece based on imaging of the workpiece by the second one of the two imagers while the first one of the two imagers is imaging the workpiece; and
switching a state in which the first one of the two imagers is used to image the workpiece to a state in which the second one of the two imagers is used to image the workpiece when a malfunction of the first one of the two imagers is detected while the first one of the two imagers is imaging the workpiece.
